# EUROPEAN PATENT APPLICATION

(11) **EP 4 848 134 A1**
(43) Date of publication of application: **02.12.2026**
(21) Application number: 25825977.9
(22) Date of filing: 23.06.2025
(51) Int. Cl.: G06F 30/27

(54) **ADAPTIVE ASSESSMENT METHOD AND APPARATUS FOR NUCLEAR POWER PLANT COMPONENT RELIABILITY, STORAGE MEDIUM, AND ELECTRONIC DEVICE**

(30) Priority: 25.06.2024 CN 202410835161
(71) Applicant: Yangjiang Nuclear Power Co., Ltd., Yangjiang, Guangdong 529500 (CN); Suzhou Nuclear Power Research Institute Co., Ltd., Suzhou, Jiangsu 215004 (CN)
(72) Inventor: GAO, Jianyong, Suzhou, Jiangsu 215004 (CN); LONG, Bin, Suzhou, Jiangsu 215004 (CN); WANG, Qiang, Suzhou, Jiangsu 215004 (CN); ZHANG, Yanpeng, Suzhou, Jiangsu 215004 (CN); QING, Chen, Suzhou, Jiangsu 215004 (CN)
(74) Representative: Westphal, Mussgnug & Partner, Patentanwälte mbB
(86) International application number: PCT/CN2025/102868
(87) International publication number: WO 2026/001911

(57) **Abstract**

The present invention relates to an adaptive assessment method and apparatus for nuclear power plant component reliability, a storage medium, and an electronic device. The method comprises the following steps: constructing a Kriging initial model; gradually updating the Kriging initial model on the basis of first-level samples of ICE to obtain a Kriging surrogate model; gradually updating the Kriging surrogate model on the basis of last-level samples of the ICE; after the updating of the Kriging surrogate model is completed, obtaining a current Kriging model; and on the basis of the current Kriging model, assessing the reliability of a component to be assessed. In the present invention, first-level adaptive Kriging gradually updates and explores a failure domain on the basis of the first-level samples of the ICE until a set stopping criterion is satisfied, and on the basis of a currently constructed Kriging model, the last-level samples of the ICE are also updated accordingly. Thus, it is ensured that an estimated failure probability converges unbiasedly to a real failure probability, and unnecessary updating of Kriging is avoided, thereby greatly improving calculation efficiency and saving calculation costs.

## Description

### TECHNICAL FIELD

The present disclosure relates to the technical field of reliability analysis of nuclear power plant components and, more particularly, to an adaptive reliability assessment method and apparatus for a nuclear power plant component, a storage medium, and an electronic device.

### BACKGROUND

During operation of various types of equipment in a nuclear power plant, uncertainties may cause functional failure of a structure and may result in serious accidents. Such failures generally involve rare-event failure probability problems. For reliability analysis of nuclear power plant components, conventional reliability analysis methods, such as Monte Carlo simulation (MCS), require an excessive number of performance-function evaluations. In addition, Kriging-based reliability analysis methods, such as active learning Kriging based on Monte Carlo simulation (ALK-MCS), involve an excessively large number of candidate sample points, resulting in low computational efficiency.

### SUMMARY

A technical problem to be addressed by the present disclosure is to provide an adaptive reliability assessment method and apparatus for nuclear power plant components, a storage medium, and an electronic device, in view of the problems existing in the prior art.

To address the foregoing technical problem, the present disclosure provides an adaptive reliability assessment method for nuclear power plant components, comprising the following steps::
constructing an initial Kriging model;
progressively updating the initial Kriging model on the basis of first-level samples of ICE to obtain a Kriging surrogate model;
progressively updating the Kriging surrogate model on the basis of last-level samples of the ICE;
obtaining a current Kriging model upon completion of the updating of the Kriging surrogate model; and
assessing reliability of a component to be assessed based on the current Kriging model.

In the adaptive reliability assessment method for nuclear power plant components according to the present disclosure, constructing the initial Kriging model comprises:
obtaining component data of the component to be assessed;
performing data analysis and processing based on the component data to obtain an original probability density function of a variable to be assessed of the component to be assessed;
determining initial sample points based on the original probability density function;
constructing a training set based on the initial sample points; and
performing training using the training set to obtain the initial Kriging model.

In the adaptive reliability assessment method for nuclear power plant components according to the present disclosure, progressively updating the initial Kriging model on the basis of first-level samples of ICE to obtain a Kriging surrogate model comprises:
step A1: determining, from the first-level samples of the ICE, a sample corresponding to a minimum value of a U learning function;
step A2: determining whether the minimum value of the U learning function is greater than or equal to a preset value, if yes, performing step A4, otherwise performing step A3;
step A3: adding the sample corresponding to the minimum value of the U learning function to the training set, and retraining the initial Kriging model; and
step A4: performing the step of progressively updating the Kriging surrogate model on the basis of the last-level samples of the ICE.

In the adaptive reliability assessment method for nuclear power plant components according to the present disclosure, constructing the training set based on the initial sample points comprises:
performing calculations based on the initial sample points to obtain actual performance function values; and
constructing the training set based on the actual performance-function values.

In the adaptive reliability assessment method for nuclear power plant components according to the present disclosure, progressively updating the Kriging surrogate model on the basis of last-level samples of the ICE comprises:
step B1: executing the ICE using the Kriging surrogate model;
step B2: determining, from the last-level samples of the ICE, a sample corresponding to a minimum value of a U learning function; and
step B3: progressively updating the Kriging surrogate model based on the sample corresponding to the minimum value of the U learning function.

In the adaptive reliability assessment method for nuclear power plant components according to the present disclosure, step B3 comprises:
step B31: calculating a relative error between a measured failure probability and an actual failure probability;
step B32: determining whether the relative error between the measured failure probability and the actual failure probability satisfies a stopping criterion, and, if yes, performing step B34, or otherwise performing step B33;
step B33: adding the sample corresponding to the minimum value of the U learning function to the constructed training set and updating the Kriging surrogate model; and
step B34: assessing the reliability of the component to be assessed based on the current Kriging model.

In the adaptive reliability assessment method for nuclear power plant components according to the present disclosure, assessing the reliability of the component to be assessed based on the current Kriging model comprises:
calculating a Kriging predicted value based on the current Kriging model;
determining estimated weights of the ICE;
determining a number of samples in the last-level samples of the ICE;
calculating a failure probability of the component to be assessed based on the Kriging predicted value, the estimated weights, and the number of samples; and
assessing the reliability of the component to be assessed based on the failure probability.

The present disclosure further provides an adaptive reliability assessment apparatus for a nuclear power plant component, comprising:
a model construction unit configured to construct an initial Kriging model;
a first-level updating unit configured to progressively update the initial Kriging model on the basis of first-level samples of ICE to obtain a Kriging surrogate model;
a second-level updating unit configured to progressively update the Kriging surrogate model on the basis of last-level samples of the ICE;
a model acquisition unit configured to obtain a current Kriging model upon completion of the updating of the Kriging surrogate model; and
a reliability assessment unit configured to assess reliability of a component to be assessed based on the current Kriging model.

The present disclosure further provides a storage medium having a computer program stored thereon, wherein the computer program is adapted to be loaded by a processor to execute the steps of the adaptive reliability assessment method for a nuclear power plant component described above.

The present disclosure further provides an electronic device, comprising a memory and a processor, the memory stores a computer program, and the processor executes the steps the adaptive reliability assessment method for a nuclear power plant component described above.

Implementation of the adaptive reliability assessment method and apparatus for nuclear power plant components, the storage medium, and the electronic device according to the present disclosure provides the following advantageous effects: comprising the following steps: constructing an initial Kriging model; progressively updating the initial Kriging model on the basis of first-level samples of ICE to obtain a Kriging surrogate model; progressively updating the Kriging surrogate model on the basis of last-level samples of the ICE; obtaining a current Kriging model upon completion of the updating of the Kriging surrogate model; and assessing reliability of a component to be assessed based on the current Kriging model. According to the present disclosure, first-level adaptive Kriging iteratively updates the Kriging model using the first-level samples of the ICE to explore a failure domain until a predetermined stopping criterion is satisfied. Based on the currently constructed Kriging model, the last-level samples of the ICE are updated accordingly. The estimated failure probability is thereby caused to converge, without bias, to the actual failure probability. At the same time, unnecessary updating of the Kriging model is avoided, thereby significantly improving computational efficiency and reducing computational cost.

### BRIEF DESCRIPTION OF THE DRAWINGS

The present disclosure is further described below with reference to the accompanying drawings and embodiments. In the drawings:
FIG. 1 is a schematic flowchart of an adaptive reliability assessment method for nuclear power plant components according to the present disclosure;
FIG. 2 is a detailed schematic flowchart of the adaptive reliability assessment method for nuclear power plant components according to the present disclosure;
FIG. 3 is a schematic diagram of a hydraulic pipeline according to the present disclosure; and
FIG. 4 is a schematic structural diagram of an adaptive reliability assessment apparatus for nuclear power plant components according to the present disclosure.

### DETAILED DESCRIPTION

The technical solutions in embodiments of the present disclosure are clearly and completely described below with reference to the accompanying drawings in the embodiments of the present disclosure. It is apparent that the described embodiments are merely some, rather than all, of the embodiments of the present disclosure. All other embodiments obtained by a person of ordinary skill in the art based on the embodiments of the present disclosure without creative effort shall fall within the scope of protection of the present disclosure.

To address difficulties in assessing reliability of nuclear power plant components, low computational efficiency in calculating failure probabilities, and high computational cost, the present disclosure provides an adaptive reliability assessment method for nuclear power plant components. The method performs reliability assessment using adaptive two-level Kriging that combines Kriging with improved cross-entropy (ICE). To avoid unnecessary updating of the Kriging model, a stopping criterion combining Kriging with statistical characteristics of ICE is provided. First-level adaptive Kriging iteratively updates the Kriging model using first-level samples of the ICE to explore a failure domain until the predetermined stopping criterion is satisfied. Second-level adaptive Kriging updates the Kriging model using last-level samples of the ICE. Based on the currently constructed Kriging model, the last-level samples of the ICE are updated accordingly, thereby ensuring that an estimated failure probability converges, without bias, to an actual failure probability. The proposed stopping criterion avoids unnecessary updating of the Kriging model while ensuring accuracy of the calculation results, thereby significantly improving computational efficiency and reducing computational cost.

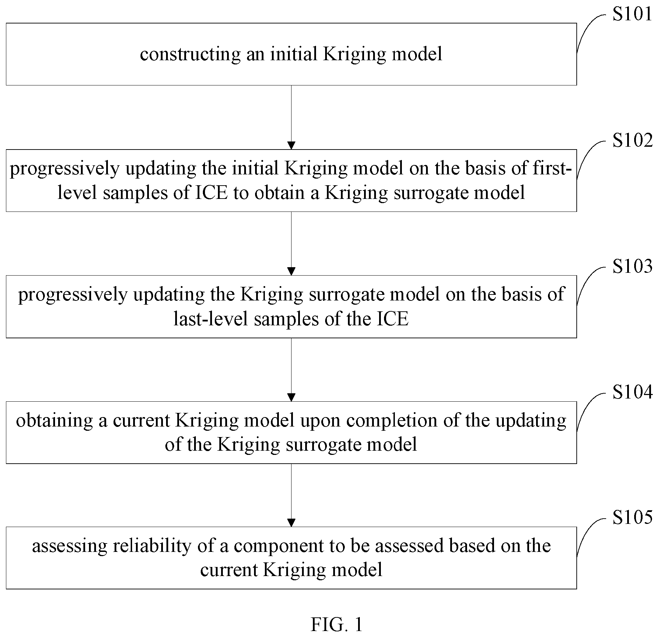

With reference to FIG. 1, FIG. 1 is a schematic flowchart illustrating a preferred embodiment of the adaptive reliability assessment method for nuclear power plant components according to the present disclosure.

Specifically, as shown in FIG. 1, the adaptive reliability assessment method for nuclear power plants component includes the following steps.

Step S101: Construct an initial Kriging model.

In some embodiments, constructing the initial Kriging model includes obtaining component data of the component to be assessed; performing data analysis and processing based on the component data to obtain an original probability density function of a variable to be assessed of the component to be assessed; determining initial sample points based on the original probability density function; constructing a training set based on the initial sample points; and performing training using the training set (DoE, Design of Experiment) to obtain the initial Kriging model.

Optionally, in some embodiments of the present disclosure, the number of the initial sample points may be 12. The initial Kriging model may be represented by g(X).

Constructing the training set based on the initial sample points includes performing calculations based on the initial sample points to obtain actual performance function values and constructing the training set based on the actual performance function values.

Step S102: Iteratively update the initial Kriging model on the basis of the first-level samples of ICE to obtain a Kriging surrogate model. Here, the Kriging surrogate model refers to the Kriging model after completion of the first-level updating process.

In some embodiments, iteratively updating the initial Kriging model on the basis of the first-level samples of the ICE to obtain the Kriging surrogate model includes the following steps.

Step A1: Determine, from the first-level samples of the ICE, a sample corresponding to a minimum value of a U learning function.

Step A2: Determine whether the minimum value of the U learning function is greater than or equal to a preset value. If yes, proceed to Step A4; otherwise, proceed to Step A3.

Optionally, in some embodiments of the present disclosure, the U learning function is expressed as follows:
$U \left(x\right) = \left|\frac{μ \left(x\right)}{σ \left(x\right)}\right| ;$

In the foregoing expression, U(x) represents the U learning function, *µ*(*x*) represents a Kriging predicted mean, and *σ*(*x*) represents a Kriging predicted standard deviation.

Optionally, in some embodiments of the present disclosure, the preset value may be set to 2.

Step A3: Add the sample corresponding to the minimum value of the U learning function to the training set, and retrain the initial Kriging model.

Step A4: Perform the step of iteratively updating the Kriging surrogate model on the basis of the last-level samples of the ICE.

Step S103: Iteratively update the Kriging surrogate model on the basis of the last-level samples of the ICE.

In some embodiments, iteratively updating the Kriging surrogate model on the basis of the last-level samples of the ICE includes the following steps.

Step B1: Execute the ICE using the Kriging surrogate model.

Step B2: Determine, from the last-level samples of the ICE, a sample corresponding to a minimum value of the U learning function.

Step B3: Iteratively update the Kriging surrogate model based on the sample corresponding to the minimum value of the U learning function.

Step B3 includes the following steps.

Step B31: Calculate a relative error between a measured failure probability and an actual failure probability.

Optionally, in some embodiments of the present disclosure, the relative error between the measured failure probability and the actual failure probability may be calculated using the following expression: ${ε}_{r} = max \left(\begin{matrix}\left|\frac{{\sum }_{i = 1}^{N} I \left(\hat{g}\left({x}_{i}\right)\leq 0\right) \hat{W} \left({x}_{i}; {ν}_{T}\right)}{{\sum }_{i = 1}^{N} I \left(\hat{g}\left({x}_{i}\right)\leq 0\right) \hat{W} \left({x}_{i}; {ν}_{T}\right) - {\sum }_{i = 1}^{{\hat{N}}_{Xf}^{u}} I \left(\hat{g}\left({x}_{i}\right)\leq 0\right) \hat{W} \left({x}_{i}; {ν}_{T}\right)}-1\right| , \\ \left|\frac{{\sum }_{i = 1}^{N} I \left(\hat{g}\left({x}_{i}\right)\leq 0\right) \hat{W} \left({x}_{i}; {ν}_{T}\right)}{{\sum }_{i = 1}^{N} I \left(\hat{g}\left({x}_{i}\right)\leq 0\right) \hat{W} \left({x}_{i}; {ν}_{T}\right) + {\sum }_{i = 1}^{{\hat{N}}_{XS}^{u}} I \left(\hat{g}\left({x}_{i}\right)\leq 0\right) \hat{W} \left({x}_{i}; {ν}_{T}\right)}-1\right|\end{matrix}\right) \leq 0.02 ;$

In the foregoing expression, *εᵣ* represents the relative error between the measured failure probability and the actual failure probability; I represents a counter; ĝ(·) represents a Kriging prediction; *Ŵ*(·) represents an estimated weight of the ICE; ${\hat{N}}_{Xf}^{μ}$ and ${\hat{N}}_{XS}^{μ}$ represent upper bounds of two types of uncertainty samples; *xᵢ* represents an ICE sample; and *v_{T}* represents a parameter of a distribution family.

Step B32: Determine whether the relative error between the measured failure probability and the actual failure probability satisfies a stopping criterion. If yes, proceed to Step B34; otherwise, proceed to Step B33.

The stopping criterion is: *εᵣ* ≤ 0.02_{∘} That is, the stopping criterion is satisfied when *εᵣ* ≤ 0.02*.*

Step B33: Add the sample corresponding to the minimum value of the U learning function to the constructed training set, and update the Kriging surrogate model.

Step B34: Assess the reliability of the component to be assessed based on the current Kriging model.

Step S104: Obtain the current Kriging model upon completion of the updating of the Kriging surrogate model.

Here, the current Kriging model refers to the Kriging model after completion of the updating using the last-level samples of the ICE.

Step S105: Assess the reliability of the component to be assessed based on the current Kriging model.

In some embodiments, assessing the reliability of the component to be assessed based on the current Kriging model includes calculating a Kriging predicted value based on the current Kriging model; determining estimated weights of the ICE; determining a number of samples in the last-level samples of the ICE;

Calculating a failure probability of the component to be assessed based on the Kriging predicted value, the estimated weights, and the number of samples; and assessing the reliability of the component to be assessed based on the failure probability.

The failure probability of the component to be assessed may be calculated using the following expression:
${P}_{f} = \frac{1}{N} {\sum }_{i = 1}^{N} {\hat{I}}_{F} \left({x}_{i}\right) \hat{W} \left({x}_{i}; {ν}_{T}\right) ;$

In the foregoing expression, N represents the number of samples in the last-level samples of the ICE, and *Î_{F}*(*x*) represents a failure indicator function associated with the Kriging prediction. The failure indicator function *Î_{F}*(*x*) is expressed as follows:
${\hat{I}}_{F} \left(x\right) = \left\{\begin{matrix}1 & \hat{g} \left(x\right) \leq 0 \\ 0 & \hat{g} \left(x\right) > 0\end{matrix}\right. ;$

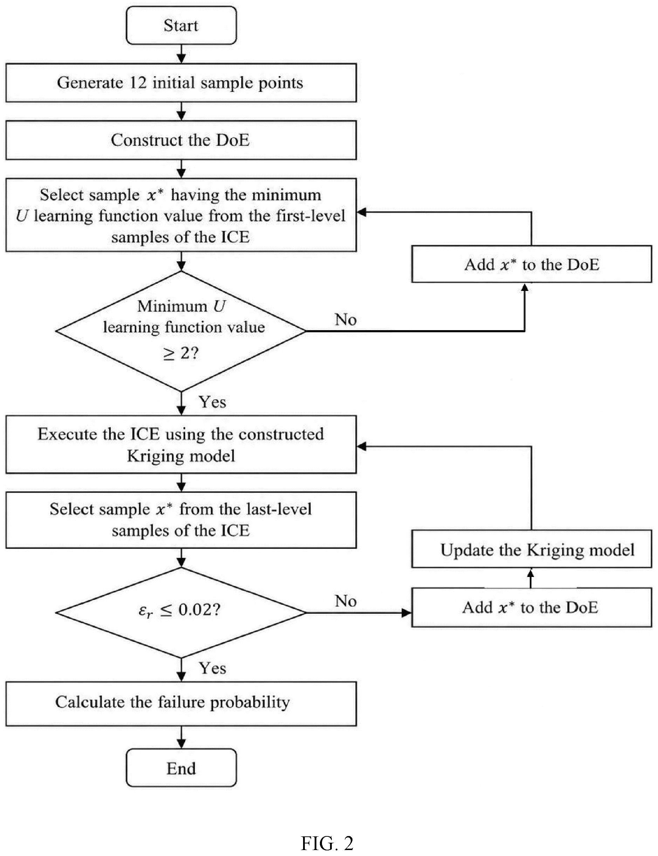

Specifically, as shown in FIG. 2, in a particular embodiment, the adaptive reliability assessment method for nuclear power plant components according to the present disclosure includes the following steps.

Step 1: Construct an initial Kriging model.

In this step, 12 initial sample points are first drawn according to an original probability density function *fₓ*(*x*) of the variables under consideration. Actual performance function values of the initial sample points are calculated, and the initial sample points and the corresponding actual performance function values are used to form a training set, namely, Design of Experiment (DoE). An initial Kriging model *g*(*X*) is constructed based on the DoE.

Step 2: Select, from first-level samples of the ICE, a sample x* corresponding to a minimum value of the U learning function, and determine whether the minimum value of the U learning function is greater than or equal to 2. If the condition is satisfied, proceed to Step 4; otherwise, perform Step 3.

Step 3: Add x* to the DoE, retrain the Kriging model, and return to Step 2.

Step 4: Execute the ICE based on the currently constructed Kriging model, and use last-level samples of the ICE as candidate sample points.

Step 5: Select a sample x* having a minimum value of the U learning function, and determine whether the proposed stopping criterion is satisfied. If the stopping criterion is satisfied, proceed to Step 7; otherwise, perform Step 6. The proposed stopping criterion is: ${ε}_{r} = max \left(\begin{matrix}\left|\frac{{\sum }_{i = 1}^{N} I \left(\hat{g}\left({x}_{i}\right)\leq 0\right) \hat{W} \left({x}_{i}; {ν}_{T}\right)}{{\sum }_{i = 1}^{N} I \left(\hat{g}\left({x}_{i}\right)\leq 0\right) \hat{W} \left({x}_{i}; {ν}_{T}\right) - {\sum }_{i = 1}^{{\hat{N}}_{Xf}^{u}} I \left(\hat{g}\left({x}_{i}\right)\leq 0\right) \hat{W} \left({x}_{i}; {ν}_{T}\right)}-1\right| , \\ \left|\frac{{\sum }_{i = 1}^{N} I \left(\hat{g}\left({x}_{i}\right)\leq 0\right) \hat{W} \left({x}_{i}; {ν}_{T}\right)}{{\sum }_{i = 1}^{N} I \left(\hat{g}\left({x}_{i}\right)\leq 0\right) \hat{W} \left({x}_{i}; {ν}_{T}\right) + {\sum }_{i = 1}^{{\hat{N}}_{XS}^{u}} I \left(\hat{g}\left({x}_{i}\right)\leq 0\right) \hat{W} \left({x}_{i}; {ν}_{T}\right)}-1\right|\end{matrix}\right) \leq 0.02 ;$

Step 6: Add x* to the DoE, update the Kriging model, and return to Step 4.

Step 7: Calculate the failure probability *P_{f}.*

The present disclosure is described below using a hydraulic pipeline as the component to be assessed.

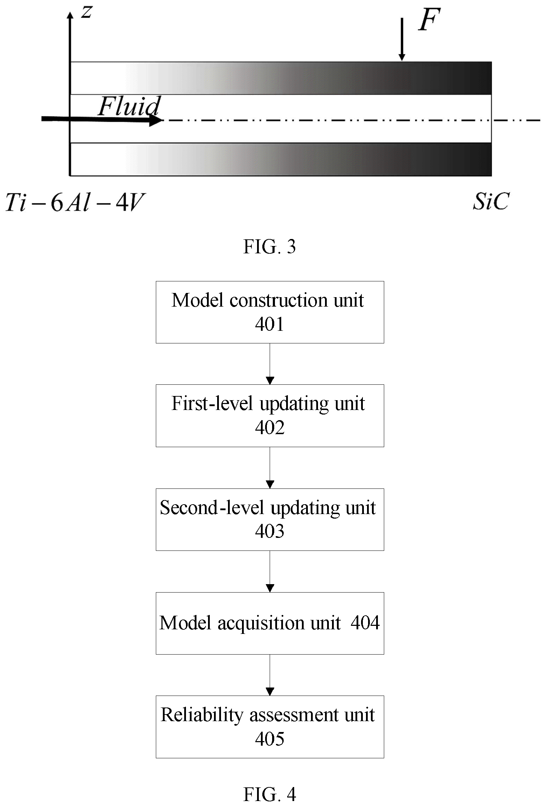

As shown in FIG. 3, a hydraulic pipeline is a pipeline configured to convey fluid in a hydraulic system and is one of the key components of various types of equipment in a nuclear power plant. The hydraulic pipeline shown in FIG. 3 is made of a functionally graded material. The material at the leftmost end is Ti-6Al-4V, and the material at the rightmost end is SiC. The pipeline is filled with hydraulic oil having a density of *ρ_{fluid},* and the hydraulic oil flows at a velocity *U.* During normal operation of the nuclear power plant, the hydraulic pipeline is subjected to an external excitation *v_{F}*. When the external excitation is very close to a natural frequency *v_{N}* of the hydraulic pipeline, resonance failure of the hydraulic pipeline occurs.

For the foregoing hydraulic pipeline, due to the presence of uncertainties, a resonance failure probability of the hydraulic pipeline needs to be assessed. A performance function for resonance failure of the hydraulic pipeline is expressed as: $y = \frac{\left|{ν}_{F}-{ν}_{N}\right|}{{ν}_{F}} - 0.05$, When y≤0, it is determined that resonance failure of the hydraulic pipeline has occurred. Table 1 shows distribution information relating to geometrical parameters and mechanical properties of the hydraulic pipeline, as well as other uncertainties to be considered. Table 2 shows calculation results obtained using different methods.

**TABLE 1 DISTRIBUTION OF UNCERTAINTY VARIABLES [0108]**

| Variable | Description | Distribution | Mean | Standard Deviation |
|---|---|---|---|---|
| *E*_{*Ti*-6Al-4v}(*GPa*) | Young's modulus | Normal | 115 | 5.75 |
| *E*_{*Si*C} (*GPa*) | Young's modulus | Normal | 440 | 22 |
| *ρ*_{*Ti-6Al-*4*V*}(Kg/m³) | Density | Normal | 4514 | 225.75 |
| *ρ_{SiC}*(Kg/m³) | Density | Normal | 3210 | 160.5 |
| *R*₀(m) | Outer radius | Normal | 0.06 | 0.003 |
| *t(m)* | Wall thickness | Normal | 0.01 | 5×10⁻⁴ |
| *v_{F}*(Hz) | External excitation | Normal | 8000 | 400 |
| *U*(m/s) | Flow | Normal | 2 | 0.1 |
| | velocity | | | |
| *n* | Volume fraction | Normal | 100 | 5.0 |
| *ρ_{fluid}*(Kg/m**³**) | Density | Normal | 720 | 36 |

**TABLE 2 COMPARISON OF ANALYSIS RESULTS [0110]**

| Method | Number of Performance-Function Evaluations | Failure Probability | Relative Error |
|---|---|---|---|
| Reference value | 3×10⁶ | 1.463×10⁻⁴ | - |
| SS | 4×10⁴ | 1.670×10⁻⁴ | 14.15 |
| ICE | 2×10⁴ | 1. 539×10⁻⁴ | 5.19 |
| ALK-MCS | 186 | 1.433×10⁻⁴ | 2.05 |
| Present disclosure | 78 | 1.441×10⁻⁴ | 1.50 |

As can be seen from a comparison with a reference value, both subset simulation (SS) and improved cross-entropy (ICE) are capable of calculating the failure probability of the hydraulic pipeline. However, each method requires more than ten thousand performance function evaluations, and the resulting failure probability has a relatively large error. Compared with ALK-MCS, the method provided by the present disclosure obtains an accurate failure probability using only 78 performance function evaluations, whereas ALK-MCS requires 186 performance function evaluations and produces a failure probability having an error greater than that produced by the method of the present disclosure.

With reference to FIG. 4, the present disclosure further provides an adaptive reliability assessment apparatus for nuclear power plant components. Specifically, as shown in FIG. 4, the adaptive reliability assessment apparatus for nuclear power plant components includes:
a model construction unit 401 configured to construct an initial Kriging model;
a first-level updating unit 402 configured to iteratively update the initial Kriging model using first-level samples of ICE to obtain a Kriging surrogate model;
a second-level updating unit 403 configured to iteratively update the Kriging surrogate model using last-level samples of the ICE;
a model acquisition unit 404 configured to obtain a current Kriging model upon completion of the updating of the Kriging surrogate model; and
a reliability assessment unit 405 configured to assess reliability of a component to be assessed based on the current Kriging model.

Specific cooperative operations among the units of the adaptive reliability assessment apparatus for nuclear power plant components may refer to the adaptive reliability assessment method for a nuclear power plant component described above and, therefore, are not described again herein.

The present disclosure further provides an electronic device including a memory and a processor. The memory is configured to store a computer program, and the processor is configured to execute the computer program to implement any of the adaptive reliability assessment methods for nuclear power plant components described above. Specifically, according to an embodiment of the present disclosure, the processes described above with reference to the flowcharts may be implemented as a computer software program. For example, an embodiment of the present disclosure includes a computer program product including a computer program carried on a computer-readable medium. The computer program includes program code for performing the method illustrated in the flowcharts. In such an embodiment, the computer program may be downloaded and installed by the electronic device and, when executed, performs the functions defined in the method according to the embodiments of the present disclosure. The electronic device according to the present disclosure may be a terminal device, such as a laptop computer, a desktop computer, a tablet computer, or a smartphone, or may be a server.

The present disclosure further provides a storage medium storing a computer program that, when executed by a processor, causes the processor to implement any of the adaptive reliability assessment methods for a nuclear power plant component described above. Specifically, it should be noted that the storage medium described above may be a computer-readable signal medium, a computer-readable storage medium, or any combination thereof. The computer-readable storage medium may be, for example, but is not limited to, an electrical, magnetic, optical, electromagnetic, infrared, or semiconductor system, apparatus, or device, or any suitable combination thereof. More specific examples of the computer-readable storage medium may include, but are not limited to, an electrical connection having one or more conductors, a portable computer disk, a hard disk, a random-access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium that contains or stores a program for use by, or in connection with, an instruction execution system, apparatus, or device. The computer-readable signal medium may include a propagated data signal embodied in baseband or as part of a carrier wave, the propagated data signal carrying computer-readable program code. Such a propagated data signal may take any of a variety of forms, including, but not limited to, an electromagnetic signal, an optical signal, or any suitable combination thereof. The computer-readable signal medium may also be any computer-readable medium other than a computer-readable storage medium and may communicate, propagate, or transport a program for use by, or in connection with, an instruction execution system, apparatus, or device. Program code embodied on a computer-readable medium may be transmitted using any appropriate medium, including, but not limited to, an electrical wire, an optical cable, radio frequency (RF) transmission, or any suitable combination thereof.

The foregoing computer-readable medium may be included in the electronic device described above or may exist separately without being incorporated into the electronic device.

The embodiments in this specification are described in a progressive manner. Each embodiment focuses primarily on differences from other embodiments, and the same or similar features among the embodiments may be understood by reference to one another. Because an apparatus disclosed in an embodiment corresponds to the method disclosed in an embodiment, the apparatus is described relatively briefly, and relevant details may be found in the description of the method.

A person skilled in the art may further appreciate that the exemplary units and algorithm steps described in connection with the embodiments disclosed herein may be implemented by electronic hardware, computer software, or a combination thereof. To clearly illustrate the interchangeability of hardware and software, the components and steps of the examples have been described above generally in terms of their functions. Whether such functions are implemented by hardware or software depends on the particular application of the technical solution and applicable design constraints. A person skilled in the art may use different methods to implement the described functions for each particular application. Such implementations, however, should not be construed as departing from the scope of the present disclosure.

The steps of a method or algorithm described in connection with the embodiments disclosed herein may be implemented directly in hardware, in a software module executed by a processor, or in a combination thereof. The software module may reside in a random-access memory (RAM), a memory, a read-only memory (ROM), an electrically programmable ROM, an electrically erasable programmable ROM, a register, a hard disk, a removable disk, a CD-ROM, or any other form of storage medium known in the art.

The foregoing embodiments are provided merely to illustrate the technical concepts and characteristics of the present disclosure, so that a person skilled in the art may understand and implement the present disclosure. The embodiments are not intended to limit the scope of protection of the present disclosure. All equivalent variations and modifications made within the scope of the claims of the present disclosure shall fall within the scope of the claims of the present disclosure.

## Claims

1. An adaptive reliability assessment method for nuclear power plant components, **characterized by** comprising the following steps:
constructing an initial Kriging model;
progressively updating the initial Kriging model on the basis of first-level samples of ICE to obtain a Kriging surrogate model;
progressively updating the Kriging surrogate model on the basis of last-level samples of the ICE;
obtaining a current Kriging model upon completion of the updating of the Kriging surrogate model; and
assessing reliability of a component to be assessed based on the current Kriging model.

2. The adaptive reliability assessment method for nuclear power plant components according to claim 1, wherein, constructing the initial Kriging model comprises:
obtaining component data of the component to be assessed;
performing data analysis and processing based on the component data to obtain an original probability density function of a variable to be assessed of the component to be assessed;
determining initial sample points based on the original probability density function;
constructing a training set based on the initial sample points; and
performing training using the training set to obtain the initial Kriging model.

3. The adaptive reliability assessment method for nuclear power plant components according to claim 2, wherein, progressively updating the initial Kriging model on the basis of first-level samples of ICE to obtain a Kriging surrogate model comprises:
step A1: determining, from the first-level samples of the ICE, a sample corresponding to a minimum value of a U learning function;
step A2: determining whether the minimum value of the U learning function is greater than or equal to a preset value, if yes, performing step A4, otherwise performing step A3;
step A3: adding the sample corresponding to the minimum value of the U learning function to the training set, and retraining the initial Kriging model; and
step A4: performing the step of progressively updating the Kriging surrogate model on the basis of the last-level samples of the ICE.

4. The adaptive reliability assessment method for nuclear power plant components according to claim 2, wherein, constructing the training set based on the initial sample points comprises:
performing calculations based on the initial sample points to obtain actual performance function values; and
constructing the training set based on the actual performance-function values.

5. The adaptive reliability assessment method for nuclear power plant components according to claim 1, wherein, progressively updating the Kriging surrogate model on the basis of last-level samples of the ICE comprises:
step B1: executing the ICE using the Kriging surrogate model;
step B2: determining, from the last-level samples of the ICE, a sample corresponding to a minimum value of a U learning function; and
step B3: progressively updating the Kriging surrogate model based on the sample corresponding to the minimum value of the U learning function.

6. The adaptive reliability assessment method for nuclear power plant components according to claim 5, wherein, step B3 comprises:
step B31: calculating a relative error between a measured failure probability and an actual failure probability;
step B32: determining whether the relative error between the measured failure probability and the actual failure probability satisfies a stopping criterion, and, if yes, performing step B34, or otherwise performing step B33;
step B33: adding the sample corresponding to the minimum value of the U learning function to the constructed training set and updating the Kriging surrogate model; and
step B34: assessing the reliability of the component to be assessed based on the current Kriging model.

7. The adaptive reliability assessment method for nuclear power plant components according to claim 1, wherein, assessing the reliability of the component to be assessed based on the current Kriging model comprises:
calculating a Kriging predicted value based on the current Kriging model;
determining estimated weights of the ICE;
determining a number of samples in the last-level samples of the ICE;
calculating a failure probability of the component to be assessed based on the Kriging predicted value, the estimated weights, and the number of samples; and
assessing the reliability of the component to be assessed based on the failure probability.

8. An adaptive reliability assessment apparatus for nuclear power plant components, comprising:
a model construction unit configured to construct an initial Kriging model;
a first-level updating unit configured to progressively update the initial Kriging model on the basis of first-level samples of ICE to obtain a Kriging surrogate model;
a second-level updating unit configured to progressively update the Kriging surrogate model on the basis of last-level samples of the ICE;
a model acquisition unit configured to obtain a current Kriging model upon completion of the updating of the Kriging surrogate model; and
a reliability assessment unit configured to assess reliability of a component to be assessed based on the current Kriging model.

9. A storage medium having a computer program stored thereon, wherein the computer program is adapted to be loaded by a processor to execute the steps of the adaptive reliability assessment method for nuclear power plant components according to any one of claims 1 to 7.

10. An electronic device, comprising a memory and a processor, wherein the memory stores a computer program, and the processor executes the steps of the adaptive reliability assessment method for nuclear power plant components according to any one of claims 1 to 7 by invoking the computer program stored in the memory.
